# EUROPÄISCHE PATENTSCHRIFT

(11) **EP 2 496 415 B1**
(45) Veröffentlichungstag und Bekanntmachung des Hinweises auf die Patenterteilung: **25.06.2014**
(21) Anmeldenummer: 10771775.3
(22) Anmeldetag: 03.11.2010
(51) Int. Cl.: B32B 27/08, B32B 27/40, B32B 27/28, C08L 75/04

(54) **EINSEITIG MATTIERTE FOLIEN UND DEREN VERWENDUNG**
FILMS MATTED ON ONE SIDE AND THEIR USE
FILMS MATIFIÉS SUR UNE FACE ET LEUR UTILISATION

(30) Priorität: 05.11.2009 DE 102009052044
(43) Veröffentlichungstag der Anmeldung: 12.09.2012
(73) Patentinhaber: Epurex Films GmbH & Co. KG, 29656 Walsrode (DE)
(72) Erfinder: KOSTHORST, Helge, 27374 Visselhövede (DE); SCHULTZE, Dirk, 29699 Bomlitz (DE)
(74) Vertreter: BIP Patents
(86) Internationale Anmeldenummer: PCT/EP2010/066728
(87) Internationale Veröffentlichungsnummer: WO 2011/054859

(56) Entgegenhaltungen:
- EP-A2- 0 714 950
- DE-A1- 4 022 741
- US-A- 4 614 183

## Beschreibung

Die Erfindung betrifft mehrschichtige elastische thermoplastische Folien, die aus mindestens einer Schicht aus thermoplastischem Polyurethan (TPE-U), mindestens einer weiteren Schicht aus thermoplastischem Polyurethan, das mit modifiziertem Acrylnitril-Butadien-Styrol-Copolymer (MABS), bevorzugt einem gepfropften Copolymeren mit Blöcken aus MMA, die auf Einheiten von Terpolymeren aus Acrylnitil, Butadien und Styrol gepfropft sind, oder mit mindestens einem gepfropften Copolymeren mit Blöcken aus MMA, die auf Einheiten von elastischen Copolymeren aus Butadien und Styrol gepfropft sind, geblendet ist, und optional mindestens einer Stützschicht aus zu TPE-U inkompatiblem, thermoplastischem Kunststoff bestehen, und deren Verwendung, insbesondere zur wasserdichten und atmungsaktiven Abdichtung von Flächengebilden, wie Webwaren und Vliesen, sowie die daraus hergestellten Gebrauchsgegenstände, insbesondere im Bekleidungsbereich und im medizinischen Wundabdeckungsbereich. Bevorzugte Ausführungsformen ergeben sich aus den Unteransprüchen.

Es ist bekannt, dass der Bekleidungsbereich und der medizinische Bereich mit Folien aus gegossenem Polyurethan bedient werden können. Aufgrund der spezifischen Eigenschaften des gegossenen Polyurethans ist dabei ein relativ teurer mattierter Release-Liner erforderlich. Außerdem wird das Polyurethan aus reaktiven Dispersionen, die noch ausreagieren müssen, gegossen, und es besteht das Risiko des Verbleibens von niedermolekularen Restkomponenten bei nicht ordnungsgemäßer Prozessfahrweise. Diese niedermolekularen Komponenten zeigen häufig Migrationstendenzen, wodurch diese Folien für Anwendungen im direkten Hautkontakt nicht mehr akzeptabel sind. Zudem sind sie nicht dauerhaft belastbar und damit nicht einsetzbar.

Es ist auch bekannt, dass porenfreie Folien mit hoher Wasserdampfdurchlässigkeit, wie beispielsweise in EP-A 0 591 782 beschrieben, verwendet werden. In EP-A 0 658 581 wird der Einsatz hydrophiler TPE-U im Bereich atmungsaktiver textiler Flächengebilde beschrieben.

Eine Übersicht über die Gruppe der thermoplastischen Elastomere geben beispielsweise:
Thermoplastic elastomers; a comprehensive review, ed. N.R. Legge, G. Holden and H. E. Schroeder, Carl Hanser Verlag, München, 1987 und Thermoplastische Elastomere - Herausforderung an die Elastomerverarbeiter, Hrsg.: VDI-Gesellschaft Kunststofftechnik, VDI Verlag, Düsseldorf, 1997.

Der Einsatz hydrophiler TPE-U für Wundabedeckungen ist z.B. in der US-A 4 614 183 oder der EP-A 0 714 950 beschrieben. Die dort beschriebenen Systeme weisen den Nachteil auf, dass sie ein ausreichendes Gleitverhalten nur durch Zugabe von hohen Anteilen an Gleit- und Antiblockmitteln erreichen.

Durch Coextrusion hinsichtlich ihrer Wasserdampfdurchlässigkeit optimierte Strukturen TPE-U sind beispielsweise aus der WO 99/38927 A1 bekannt. Die dort beschriebenen Coextrudate aus hydrophilen TPE-U verschiedener Shore-A-Härte bzw. unterschiedlichen Weichsegment-Anteils weisen, ohne Zugabe von hohen Anteilen -an Gleit- und Antiblockmitteln, ebenfalls kein ausreichendes Gleitverhalten auf.

Einschichtige Folien aus TPE-U, Verfahren zu ihrer Herstellung sowie ihre Verwendung sind beispielsweise aus EP-A 0 308 683, EP-A 0 526 858, EP-A 0 571 868 oder EP-A 0 603 680 bekannt. Die in diesen Schriften beschriebenen Folien lassen sich als Schichten in sogenannten Dublofolien integrieren oder sind bereits in die an sich bekannten Dublofolien integriert worden. Ebenso ist die Herstellung von TPE-U-Folien unter Einsatz von im Wesentlichen unverträglichen Polymeren als Mattierungsmittel in TPE-U, z.B. in DE-A 41 26 499 beschrieben.

Bekannt sind auch mehrschichtige, durch Coextrusion hergestellte Folien aus TPE-U und anderen, der Gruppe der Thermoplaste zugeordneten Polymeren. Neben der Coextrusion mit polyolefinischen Thermoplasten, bei denen in der Regel die polyolefinische Schicht praktisch keine Verbundhaftung zur TPE-U-Schicht eingeht und lediglich die Funktion einer Stütz- beziehungsweise Trennschicht besitzt, sind auch mehrschichtige Aufbauten mit guter Verbundhaftung bekannt. In EP-A 0 842 768 wird beispielsweise ein mehrschichtiger Aufbau aus TPE-U und einem polyolefinischen Haftvermittler beschrieben.

Die Verminderung des Blockverhaltens von thermoplastischen TPE-U durch Polystyrol ist z.B. aus EP-A 0 754 543 bekannt. Die US-A 2006/0189754 beschreibt eine Methode zur Herstellung von compoundierten, transparenten Materialmischungen und gut gleitende, dickwandige Artikel daraus. In US-A 2006/0189754 wurden bis zu 50% modifiziertes Acrylnitril-Butadien-Styrol-Copolymer (MABS) in TPE-U enthaltenden Mischungen benutzt. Diese Artikel weisen aufgrund der Inkompatibilität der beschriebenen Komponenten den Nachteil einer geringen mechanischen Belastbarkeit auf. Die Artikel gemäß US-A 2006/0189754 nutzen deshalb penetrierbare Substrate als Trägermaterial.

TPE-U Folien nach dem Stand der Technik enthalten normalerweise zusätzlich gebräuchliche Additive aus der Gruppe umfassend:
I. Anorganische oder organische Antiblockmittel,
II. Gleit- oder Entformungsmittel,
III. Pigmente oder Füllstoffe und
IV. Stabilisatoren.

Der Anteil der genannten Additive I bis IV liegt in Summe bevorzugt zwischen 0 Gew.-% und 30 Gew.-%, bezogen auf die Folie.

Die gebräuchlichsten Additive, die auch in den nachfolgend beschriebenen, erfindungsgemäßen Folien enthalten sein können, sind beispielsweise bei Gächter und Müller beschrieben in: Plastics Additives, Carl Hanser Verlag München, 4. Ausgabe (1996).

Aufgabe war es daher, eine an migrierenden Additiven arme, weich elastische Folie mit hoher Atmungsaktivität und nicht glänzendem Erscheinungsbild bereitzustellen.

Hierbei bestand die Notwendigkeit einer gut verklebbaren Aussenschicht für Haftklebstoffverankerung, einer schützenden Barriereschicht und einer matten Oberfläche kombiniert mit einer hohen Wasserdampfdurchlässigkeit und dauerhaften Strukturintegrität in Form einer ausreichenden Verbundhaftung.

Erfindungsgemäß gelang es, eine den genannten Anforderungen genügende Folie bereitzustellen.

Gegenstand der Erfindung ist eine mehrschichtige thermoplastische Folie, die aus mindestens zwei Schichten aufgebaut ist, wobei mindestens eine Schicht (1) aus thermoplastischem Polyurethan (TPE-U) und mindestens eine Schicht (2) aus einem Blend aus TPE-U mit modifiziertem Acryl-nitril-Butadien-Styrol (MABS), bevorzugt einem gepfropften Copolymeren mit Blöcken aus MMA, die auf Einheiten von Terpolymeren aus Acrylnitil, Butadien und Styrol gepfropft sind, oder mit mindestens einem gepfropften Copolymeren mit Blöcken aus MMA, die auf Einheiten von elastischen Copolymeren aus Butadien und Styrol gepfropft sind, gebildet wird.

Der Masseanteil des TPE-U in der Mehrschichtfolie beträgt vorzugsweise mindestens 80 Gew.%.

Eine matte Oberfläche ist besonders wichtig, um beispielsweise bei der Anwendung als Wundabdeckungen keinen die visuelle Diagnose des Arztes irritierenden Glanz auftreten zu lassen und beim Patienten durch eine dem optischen Eindruck der Haut nahe kommenden Eindruck zu hinterlassen, der den Heilungsprozess psychologisch begünstigt.

Bei sehr dünnen und weichen Folien ist eine Trägerfolie notwendig, da diese sowohl in der Herstellung als auch in der Weiterverarbeitung sonst nicht handhabbar sind, weil bereits sehr geringe Zugkräfte, die für den Transport der Folie durch die Anlage notwendig sind, zu einer erheblichen Dehnung der Folie fuhren. Der Träger wird daher erst dann entfernt, wenn andere, in weiteren Verarbeitungsschritten hinzugefügte Schichten, eine ausreichende Stabilität gewährleisten oder eine Dehnung der Folie in der Verarbeitung gewünscht ist. Diese Folien mit Trägerschichten erfordern geringen Glanz und gute Gleiteigenschaften auf der dem Träger zugewandten Seite, da diese im Regelfall in den Endprodukten offen liegt.

Zur Minimierung der bei der Fertigung anfallenden Kosten erfolgt die Herstellung der erfmdungsgemäßen Folie, die eine Kombination der gewünschten Eigenschaften aufweist, bevorzugt in einem Einstufen-Prozess.

Geeignete TPE-U oder Mischungen daraus können beispielsweise durch die bekannten Batch-, teil- oder vollkontinuierlichen Verfahren (beispielsweise in EP-A 1 145 847 beschrieben) hergestellt werden.

Geeignete TPE-U sind beispielsweise unter den Handelsnamen Desmopan^{®}, Elastollan^{®}, Estane^{®}, Morthane^{®}, Pellethane^{®}, Pearlthane^{®}, Skythane^{®}, Tecoflex^{®} oder Texin^{®} erhältlich.

In einer besonders geeigneten Ausführung weisen die erfindungsgemäßen Folien eine oder mehrere Schichten aus TPE-U auf, deren Weichsegment-Phase zu einem überwiegenden Teil aus Polyether-Weichsegment-Bausteinen gebildet wird.

Die Schichten (1) und (2) der erfindungsgemäßen Mehrschichtfolie sind aus wenigstens einem TPE-U aufgebaut, vorzugsweise aus einem TPE-U mit überwiegend linearer Molkülstruktur, dessen längerkettige Diolkomponente bevorzugt ein difunktioneller Polyether und besonders bevorzugt ein difunktioneller hydrophiler Polyether ist, und das eine Shore-Härte von vorzugsweise 70 - 95 A, besonders bevorzugt 80 - 90 A, bestimmt nach DIN 53 505, aufweist.

Die bevorzugt hydrophilen TPE-U werden aus alternierenden Blöcken von Weich- und Hartsegmenten gebildet, wobei die Weichsegmente aus difunktionellen Polyolen gebildet werden, die aus polymerisierten Ethern und/oder Estern aufgebaut sind, und wobei die Hartsegmente aus den Reaktionsprodukten von niedermolekularen Diolen, d.h. dem Kettenverlängerer und Diisocyanaten gebildet werden. Diese Blöcke werden vorteilhafterweise so miteinander verknüpft, daß das Hartsegment jeweils die beiden Enden der Molekülkette bildet und gegebenenfalls die an den Enden des linearen Moleküls befindlichen reaktiven Isocyanatgruppen durch Alkohole verkappbar sind.

Erfindungsgemäß können für die einzelnen Schichten der Folie TPE-U mit unterschiedlicher Wasserdampfdurchlässigkeit verwendet werden. Dies kann durch unterschiedliche Weichsegmente und/oder modifizierte Hartsegmente der TPE-U in den einzelnen Schichten erreicht werden. Für die Weichsegmente ergibt sich eine Zunahme der Wasseraufnahmefähigkeit in der Reihenfolge: Polyester < Polytetrahydrofuran < Polyethylenoxid.

Ebenso geeignet sind Ether-Carbonat-Weichsegment-Bausteine. Diese zeichnen sich durch eine gute Beständigkeit gegen Hydrolyse aus. Zudem weisen derartige Materialien eine gute Resistenz gegen Pilz- und Mikrobenbefall auf. Besonders bevorzugt sind auf Polytetramethylenglycol basierende Ether-Weichsegment-Bausteine.

Für die Hartsegmente sind z.B. Modifizierungen möglich, wie sie beispielsweise in den durch die Bayer MaterialScience AG vertriebenen dual hydrophilierten Impraperm^{®}-Typen realisiert sind, und wie sie z.B. in EP-A 0 525 567 und DE-A 42 36 569 beschrieben sind.

Zur Herstellung der Schicht (2) werden neben dem vorher beschriebenen TPE-U MABS eingesetzt, vorzugsweise thermoplastische Methylmethacrylat-Acrylnitril-Butadien-Styrol-Polymere.

Die erfindungsgemäß eingesetzten MABS-Zubereitungen bestehen bevorzugt aus Copolymeren enthaltend Methyl-Methacrylat (MMA), Acrylnitil, Butadien und Styrol. Die können in alternierenden Blöcken und Segmenten oder auch statistisch angeordnet sein. Besonders bevorzugt sind gepfropfte Copolymere mit Blöcken aus MMA, die auf Einheiten von Terpolymeren aus Acrylnitil, Butadien und Styrol oder auch elastischen Copolymeren aus Butadien und Styrol gepfropft sind.

Die Komponenten TPE-U und MABS sind im geschmolzenen Zustand homogen mischbar, bilden aber beim Abkühlen bzw. Verfestigen, aufgrund abnehmender Mischbarkeit, mehrere Phasen aus. So liegen die MABS-Einheiten nach dem Verfestigen der Schmelze in steifen Domänen vor. Diese thermisch initiierbaren Eigenschaftsveränderungen können mehrfach durchlaufen werden und erlauben somit vielfache Prozessschritte mit diesen Materialien.

Überraschend ist auch die gute Haftung des Blend aus MABS/TPE-U zur Schicht aus reinem TPE-U, da nach dem Stand der Technik (US-A 2006/0189754) ein penetrierbarer Träger zum Erhalt geeigneter mechanischer Eigenschaften nötig ist.

Überraschenderweise haben die erfindungsgemäß eingesetzten MABS Copolymere in der TPE-U Matrix bei der Ausformung zu dünnwandigen Folien eine Glanz reduzierende Wirkung.

Bevorzugt ist die Verwendung von Mischungen verschiedener TPE-U auf unterschiedlicher Ether-Basis, besonders bevorzugt eine Mischung verschiedener TPE-U auf Ether-Basis, von denen mindestens ein TPE-U eine Weichsegment-Molekulargewichtsverteilung aufweist, die eine Ausbildung von kristallinen Überstrukturen ermöglicht.

Zur Herstellung der Schicht (2) werden Mischungen der thermoplastischen Polyurethane und der thermoplastischen MABS-Copolymere eingesetzt. Die Phasenseparation des Blends kann bei Bedarf durch haft- und phasenvermittelnde Stoffe, insbesondere modifizierte PE-Copolymere zusätzlich stabilisiert werden.

In einer bevorzugten Ausführung liegt der Anteil an MABS Copolymeren in der Schicht (2) zwischen 5 und 40 Gew.-%.

In einer besonders bevorzugten Ausführung wird den Schichten aus TPE-U (1) und den Schichten aus einem Blend aus TPE-U / MABS (2) zusätzlich mindestens eine weitere Trägerschicht (3) aus einem nicht kompatiblen thermoplastischen Kunststoff, bevorzugt aus der Gruppe der Polyolefine, hinzugefügt, die der TPE-U / MABS-Schicht (2) zugewandt ist. Als Polyolefine sind besonders bevorzugt Polyethylene (PE), ganz besonders bevorzugt Polyethylene niederer Dichte (PE-LD) geeignet.

Überraschend ist, dass die oben beschriebene Glanz reduzierende Wirkung der MABS Copolymere auch so nachzuweisen ist, wenn die als Blend rezeptierte Schicht aus TPE-U und MABS durch die coextrudierten Stützschichten aus nicht kompatiblem Kunststoff abgedeckt wird.

Der erfindungsgemäße Schichtenaufbau mit zusätzlichen Trägerschichten wird insbesondere bei weichen oder dünnen Ausführungen der Folie verwendet, da die beschriebenen weichelastischen Folien sowohl in der Herstellung als auch in der Weiterverarbeitung sonst nicht handhabbar sind, weil bereits sehr geringe Zugkräfte, die für den Transport der Folie durch die Anlage notwendig sind, zu einer erheblichen Dehnung der Folie führen.

Bevorzugt sind Folien mit einer Gesamtdicke der TPE-U-enthaltenden Schichten (1) und (2) zwischen 10 µm und 50 µm, besonders bevorzugt liegt diese Dicke zwischen 15 µm und 25 µm. Die Dicke der einzelnen Schichten (1) oder (2) liegt bevorzugt zwischen 5 µm und 45 µm.

Die Dicke der optionalen Trägerschicht (3) liegt bevorzugt zwischen 15 µm und 100 µm.

Zur Herstellung der erfindungsgemäßen Mehrschichtfolie eignen sich besonders die gängigen thermischen Umformverfahren zur Verarbeitung von Kunststoffen zu mehrschichtigen Flächengebilden. Hier ist die Herstellung durch Coextrusion zu nennen, die bevorzugt nach dem Blasfolienverfahren erfolgt. Durch die Coextrusion ist zusätzlich eine bessere Verbundhaftung der reinen TPE-U Schicht (1) und der Schicht (2) aus Mischungen thermoplastischer Polyurethane und thermoplastischem MABS zu erzielen.

Die erfindungsgemäßen Folien können zusätzlich mit den bekannten physikalischen und chemischen Behandlungsmethoden, wie beispielsweise der Corona-Behandlung, ein- oder beidseitig in ihren Oberflächeneigenschaften modifiziert werden.

Bevorzugt werden die erfindungsgemäßen Folien zur Trennung zwischen Feuchtigkeitsquellen und -senken eingesetzt. Beispielsweise werden textile Membranen und Wundabdeckungen mit den erfindungsgemäßen Folien hergestellt. Die Verbindung mit zusätzlich erforderlichen Substraten wie Textilien oder Vliesen und Schäumen erfolgt unter Einsatz gängiger Fügeverfahren. Bevorzugt ist das Klebstoffkaschieren.

Die Erfindung soll anhand der nachfolgenden Beispiele näher erläutert werden.

### Beispiele

Die im Rahmen der nachfolgenden Beispiele und Vergleichsbeispiele beschriebenen Folien wurden durch Blasfoliencoextrusion hergestellt. Die zum Aufschluss thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

### Ausgangsmaterialien:

| | |
|---|---|
| Ether-TPE-U: | Thermoplastisches Polyurethan mit kristallinen Überstrukturen auf Basis Polytetrahydrofuran, Methylendiphenylendiisocyanat und Butandiol als Kettenverlängerer und einer Shore-A-Härte von 87 gemessen nach DIN 53 505, entsprechend einer Härte von 36 Shore-D |
| Hydrophiles Ether-TPE-U: | |
| | Thermoplastisches Polyurethan auf Basis Polyethylenglycol, Methylendiphenylendiisocyanat und Butandiol als Kettenverlängerer und einer Shore-A-Härte von 83, gemessen nach DIN 53 505, entsprechend einer Härte von 32 Shore-D |
| Silikat: | Diatomäenerde |
| Thermoplastisches MABS Copolymer: | |
| | Transparent gepfropftes Methylmethacrylat-Acrylnitril-Butadien-Styrol-Copolymer mit einer Kugeldruckhärte von 75 MPa nach ISO 2039-1 gemessen bei 358 N Belastung über 30 sec |
| PE-LD: | Polyethylen mit niedriger Dichte ohne Wachse und zusätzliche Antiblockadditive und einer Dichte von 0,924 g/cm3; Shore-D-Härte von 48 gemessen nach DIN 53 505 |

### Beispiel 1:

Mit Hilfe eines Dreischicht-Blasfolienwerkzeuges wurde eine Folie mit einer 11 µm starken Außenschicht (1) aus einer Mischung aus 70 Gew.-% eines thermoplastischen Ether-TPE-U der Shore-A-Härte 87 und 30 Gew.-% eines hydrophilen Ether-TPE-U der Shore-A-Härte 83 hergestellt.

Eine 9 µm starke, der Trägerschicht (3) zugewandte Zwischenschicht (2) wurde aus einer Mischung aus 60 Gew.-% eines thermoplastischen Ether-TPE-U der Shore-A-Härte 87 und 30 Gew.-% eines hydrophilen Ether-TPE-U einer Shore-A-Härte 83 sowie 10 Gew.% eines thermoplastischen MABS Copolymer hergestellt.

Die 40 µm dicke Trägerschicht (3) wurde aus einem PE-LD mit einer Dichte von 0,924 g/cm³ hergestellt.

Sämtliche für die jeweilige Schicht eingesetzten Komponenten wurden gemeinsam in einem Extruder aufgeschmolzen.

Die Extrusionseinrichtungen wurden bei Temperaturen zwischen 160°C und 200°C betrieben. Die drei Schmelzeströme wurden in einem Dreischicht-Blasfolienkopf mit einer Verarbeitungstemperatur von 195°C übereinandergelegt und durch eine Ringspaltdüse mit einem Durchmesser von 600 mm ausgetragen. Durch Anblasen mit Luft wurde die ringförmige Schmelzefahne abgekühlt, anschließend flachgelegt, getrennt und aufgewickelt.

### Beispiel 2:

Mit Hilfe eines Zweischicht-Blasfolienwerkzeuges wurde eine Folie hergestellt, deren erste 20 µm dicke Schicht (1) aus einem thermoplastischen Ether-TPE-U der Shore-A-Härte 87 gebildet wurde. Dieser 20 µm dicken Schicht wurde als Additiv 4 Gew.% Silikat zugesetzt.

Die zweite Schicht (2) wurde aus einer Mischung aus 89 Gew.-% eines thermoplastischen Ether-TPE-U der Shore-A-Härte 87 und 10 Gew.-% eines thermoplastischen MABS Copolymer hergestellt.

Sämtliche für die jeweilige Schicht eingesetzten Komponenten wurden gemeinsam in einem Extruder aufgeschmolzen.

Die Extrusionseinrichtungen wurden bei Temperaturen zwischen 160°C und 190°C betrieben. Die zwei Schmelzeströme wurden in einem Zweischicht-Blasfolienkopf mit einer Verarbeitungstemperatur von 190°C übereinander gelegt und durch eine Ringspaltdüse mit einem Durchmesser von 150 mm ausgetragen. Durch Anblasen mit Luft wurde die ringförmige Schmelzefahne abgekühlt, anschließend flachgelegt, getrennt und aufgewickelt.

### Vergleichsbeispiel 3:

Mit Hilfe eines Zweischicht-Blasfolienwerkzeuges wurde eine Folie mit einer Außenschicht (1) mit einer Stärke von 20 µm aus einer Mischung aus 70 Gew.% eines thermoplastischen Ether-TPE-U der Shore-A-Härte 87 und 30 Gew.-% eines hydrophilen Ether-TPE-U der Shore-A-Härte 83 hergestellt.

Eine 40 µm starke Trägerschicht (3) wurde aus einem PE-LD mit einer Dichte von 0,924 g/cm³ hergestellt.

Sämtliche für die jeweilige Schicht eingesetzten Komponenten wurden gemeinsam in einem Extruder aufgeschmolzen.

Die Extrusionseinrichtungen wurden bei Temperaturen zwischen 160°C und 200°C betrieben. Die zwei Schmelzeströme wurden in einem Zweischicht-Blasfolienkopf mit einer Verarbeitungstemperatur von 195°C übereinander gelegt und durch eine Ringspaltdüse mit einem Durchmesser von 500 mm ausgetragen. Durch Anblasen mit Luft wurde die ringförmige Schmelzefahne abgekühlt, anschließend flachgelegt, getrennt und aufgewickelt.

### Vergleichsbeispiel 4:

Mit Hilfe eines Zweischicht-Blasfolienwerkzeuges wurde eine Folie mit einer 20 µm starken Außenschicht (1) aus einer Mischung aus 55 Gew.% eines thermoplastischen Ether-TPE-U der Shore-A-Härte 87, 30 Gew.-% eines hydrophilen Ether-TPE-U der Shore-A-Härte 83 und 10 Gew.-% eines thermoplastischen MABS Copolymer hergestellt.

Eine 40 µm starke Trägerschicht (3) wurde aus einem PE-LD mit einer Dichte von 0,924 g/cm³ hergestellt.

Sämtliche für die jeweilige Schicht eingesetzten Komponenten wurden gemeinsam in einem Extruder aufgeschmolzen.

Die Extrusionseinrichtungen wurden bei Temperaturen zwischen 160°C und 200°C betrieben. Die zwei Schmelzeströme wurden in einem Zweischicht-Blasfolienkopf mit einer Verarbeitungstemperatur von 195°C übereinander gelegt und durch eine Ringspaltdüse mit einem Durchmesser von 500 mm ausgetragen. Durch Anblasen mit Luft wurde die ringförmige Schmelzefahne abgekühlt, anschließend flachgelegt, getrennt und aufgewickelt.

### Vergleichsbeispiel 5:

Mit Hilfe eines Einschicht-Blasfolienwerkzeuges wurde eine Folie hergestellt, die aus einem thermoplastischen Ether-TPE-U der Shore-A-Härte 87 gebildet wurde. Dieser 30 µm dicken Folie wurden als Additiv 4 Gew.-% Silikat zugesetzt.

Alle eingesetzten Komponenten wurden gemeinsam in einem Extruder aufgeschmolzen.

Die Extrusionseinrichtungen wurden bei Temperaturen zwischen 160°C und 190°C betrieben. Der Schmelzestrom wurde einem Einschicht-Blasfolienkopf mit einer Verarbeitungstemperatur von 190°C zugeführt und durch eine Ringspaltdüse mit einem Durchmesser von 500 mm ausgetragen. Durch Anblasen mit Luft wurde die ringförmige Schmelzefahne abgekühlt, anschließend flachgelegt, getrennt und aufgewickelt.

### Bewertung der hergestellten Folien:

Alle fünf Folien wurden hinsichtlich Wasserdampfdurchlässigkeit, gemessen nach DIN 53 122 bei 38°C und 90 % relativer Feuchte, und mechanischer Belastbarkeit, gemessen nach DIN EN ISO 527 (Zugversuch) und DIN 53 515 (Weiterreißfestigkeit) geprüft. Die Haftung zwischen Träger und TPE-U wurde in Anlehnung an ASTM F88a auf einer Streifenbreite von 200 mm gemessen. Die Glanzmessung erfolgte nach DIN 67530 auf der dem Träger zugewandten Seite bzw. bei trägerlosen Folien auf der Seite mit dem geringeren Glanz. Die Reibzahl Folie gegen Metall wurde nach DIN EN ISO 8295 auf der gleichen Seite, auf der die Glanzmessung erfolgte, bestimmt.

| | **Beispiel 1** | **Beispiel 2** | **Vergleichsbeispiel 3** | **Vergleichsbeispiel 4** | **Vergleichsbeispiel 5** |
|---|---|---|---|---|---|
| Dicke [µm] | 20 | 30 | 20 | 20 | 30 |
| Wasserdampfdurchlässigkeit DIN 53 122 bei 38°C/90 % rel. Feuchte [g/m²] pro Tag | 2300 | 1200 | 2400 | 2250 | 1280 |
| Bruchspannung [MPa] DIN EN ISO 527 | 35 | 45 | 40 | 22 | 55 |
| Bruchdehnung [%] DIN EN ISO 527 | 660 | 570 | 630 | 550 | 610 |
| Trennkraft TPE-U/Träger [N] | 0,41 | entfällt | 0,42 | 0,40 | entfällt |
| Glanz 20° | 1,6 | 1,5 | 3,2 | 1,4 | 2,1 |
| Glanz 60° | 14,4 | 14,2 | 27,7 | 14,1 | 20,6 |
| Glanz 85° | 23,2 | 22,0 | 57,5 | 23,4 | 40,5 |
| Reibzahl Folie/Metall DIN EN ISO 8295 | 0,47 | 0,44 | 0,49 | 0,45 | 0,48 |

Die erfindungsgemäßen Folien aus Beispiel 1 und 2 sind den bekannten Folien aus den Vergleichsbeispielen 3 bis 5 deutlich überlegen. Durch den erfindungsgemäßen Folienaufbau in Beispiel 1 und 2 wurde eine deutliche Reduktion des Glanzes bei allen Messwinkeln gegenüber den Vergleichsbeispielen 3 und 5 erreicht. Vergleichsbeispiel 4 zeigt zwar einen ähnlichen Glanz, die Bruchspannung liegt jedoch deutlich unter den anderen Folien und ist unzureichend.

Die Trennkraft zwischen der Trägerfolie und den TPE-U-Schichten sowie die Reibzahl sind bei allen Mehrschichtfolien ähnlich gut.

Die Wasserdampfdurchlässigkeit der erfindungsgemäßen Mehrschichtfolien ist ebenfalls ähnlich der der bekannten Folien (Beispiel 1 im Vergleich zu Vergleichsbeispiel 3 und Beispiel 2 im Vergleich zu Vergleichsbeispiel 5).

## Patentansprüche

1. Gleitfähige, mindestens zweischichtige elastische, thermoplastische Folie, **dadurch gekennzeichnet, dass** diese Folie mindestens eine Schicht (1) aus mindestens einem thermoplastischen Polyurethan und mindestens eine Schicht (2) aus einer Mischung aus mindestens einem thermoplastischen Polyurethan mit mindestens einem modifizierten Acrylnitril-Butadien-Styrol-Copolymer, bevorzugt einem gepfropften Copolymeren mit Blöcken aus MMA, die auf Einheiten von Terpolymeren aus Acrylnitil, Butadien und Styrol gepfropft sind, oder mit mindestens einem gepfropften Copolymeren mit Blöcken aus MMA, die auf Einheiten von elastischen Copolymeren aus Butadien und Styrol gepfropft sind, aufweist.

2. Folie gemäß Anspruch 1, **dadurch gekennzeichnet, dass** diese Folie zusätzlich zur Schicht (1) und Schicht (2) mindestens eine weitere Schicht (3) aus mindestens einem zu thermoplastischem Polyurethan inkompatiblen Polymer aufweist.

3. Folie gemäß Anspruch 2, **dadurch gekennzeichnet, dass** die Schicht (2) zwischen der Schicht (1) und der Schicht (3) angeordnet ist.

4. Folie gemäß Anspruch 1, **dadurch gekennzeichnet, dass** der Masseanteil der Schicht (1) an der Folie mindestens 70 Gew.-% beträgt.

5. Folie gemäß Anspruch 2, **dadurch gekennzeichnet, dass** die Folie 5-schichtig mit drei Schichten (1), einer Schicht (3) und zwei Schichten (2) zwischen der Schicht (3) und den Schichten (1) aufgebaut ist.

6. Folie gemäß Anspruch 1, **dadurch gekennzeichnet, dass** die Mischung der Schicht (2) aus 5 bis 40 Gew.-% an modifiziertem Acrylnitril-Butadien-Styrol-Copolymer oder gepfropften Copolymeren mit Blöcken aus MMA, die auf Einheiten von elastischen Copolymeren aus Butadien und Styrol gepfropft sind, und 60 bis 95 Gew.-% an thermoplastischem Polyurethan besteht.

7. Folie gemäß Anspruch 1, **dadurch gekennzeichnet, dass** das in der Schicht (1) eingesetzte thermoplastische Polyurethan durch im Wesentlichen aus Polytetrahydrofuran- und Polyethylenglycol Ethergruppen aufgebaute Weichsegmente charakterisiert ist.

8. Folie gemäß Anspruch 1, **dadurch gekennzeichnet, dass** das in der Schicht (1) eingesetzte thermoplastische Polyurethan im Wesentlichen aus Polyethercarbonatgruppen aufgebaute Weichsegmente aufweist.

9. Folie gemäß Anspruch 1 oder 2, **dadurch gekennzeichnet, dass** die Folie durch den Blasfolienprozess herstellbar ist.

10. Folie gemäß Anspruch 1, **dadurch gekennzeichnet, dass** die Folie eine Gesamtdicke von 10 µm bis 50 µm aufweist, wobei die Dicke der Schicht(en) (1) zwischen 5 µm und 45 µm und die Dicke der Schicht(en) (2) zwischen 5 µm und 45 µm liegt.

11. Folie gemäß Anspruch 2, **dadurch gekennzeichnet, dass** als inkompatibles Polymer für die Schicht (3) Polyethylen eingesetzt wird.

12. Folie gemäß Anspruch 11, **dadurch gekennzeichnet, dass** als inkompatibles Polymer für die Schicht (3) Polyethylen niedriger Dichte eingesetzt wird.

13. Verwendung der Folie gemäß einem oder mehreren der Ansprüche 1 bis 12 zur Herstellung von Membransystemen.

14. Verwendung der Folie gemäß einem oder mehreren der Ansprüche 1 bis 12 zur Herstellung von Wundabdeckungen.

## Claims

1. An at least two-layer elastic, thermoplastic film having good surface slip, **characterised in that** this film has at least one layer (1) of at least one thermoplastic polyurethane and at least one layer (2) of a mixture of at least one thermoplastic polyurethane with at least one modified acrylonitrile-butadiene-styrene copolymer, preferably a grafted copolymer with blocks of MMA grafted onto units of terpolymers of acrylonitrile, butadiene and styrene, or with at least one grafted copolymer with blocks of MMA grafted onto units of elastic copolymers of butadiene and styrene.

2. The film according to claim 1, **characterised in that** this film has, in addition to layer (1) and layer (2), at least one further layer (3) of at least one polymer which is incompatible with thermoplastic polyurethane.

3. The film according to claim 2, **characterised in that** layer (2) is arranged between layer (1) and layer (3).

4. The film according to claim 1, **characterised in that** the proportion by weight of layer (1) in the film is at least 70 wt.%.

5. The film according to claim 2, **characterised in that** the film is 5-layered with three layers (1), one layer (3) and two layers (2) between layer (3) and layers (1).

6. The film according to claim 1, **characterised in that** the mixture of layer (2) consists of 5 to 40 wt.% modified acrylonitrile-butadiene-styrene copolymer or grafted copolymers with blocks of MMA grafted onto units of elastic copolymers of butadiene and styrene, and 60 to 95 wt.% thermoplastic polyurethane.

7. The film according to claim 1, **characterised in that** the thermoplastic polyurethane used in layer (1) is **characterised by** soft segments made up substantially of polytetrahydrofuran and polyethylene glycol ether groups.

8. The film according to claim 1, **characterised in that** the thermoplastic polyurethane used in layer (1) comprises soft segments made up substantially of polyether carbonate groups.

9. The film according to claim 1 or 2, **characterised in that** the film can be produced by the blown film process.

10. The film according to claim 1, **characterised in that** the film has an overall thickness of 10 µm to 50 µm, wherein the thickness of layer(s) (1) is between 5 µm and 45 µm and the thickness of layer(s) (2) is between 5 µm and 45 µm.

11. The film according to claim 2, **characterised in that** polyethylene is used as the incompatible polymer for layer (3).

12. The film according to claim 11, **characterised in that** low-density polyethylene is used as the incompatible polymer for layer (3).

13. Use of the film according to one or more of claims 1 to 12 for the production of membrane systems.

14. Use of the film according to one or more of claims 1 to 12 for the production of wound coverings.

## Revendications

1. Film thermoplastique élastique au moins bicouche, à faible adhérence de contact, **caractérisé en ce que** ce film comporte au moins une couche (1) à base d'au moins un polyuréthane thermoplastique et au moins une couche (2) à base d'un mélange d'au moins un polyuréthane thermoplastique avec au moins un copolymère acrylonitrile-butadiène-styrène modifié, de préférence un copolymère greffé à séquences de MMA qui sont greffées sur des motifs de terpolymère d'acrylonitrile, butadiène et styrène, ou avec au moins un copolymère greffé à séquences de MMA qui sont greffées sur des motifs de copolymère élastique de butadiène et styrène.

2. Film selon la revendication 1, **caractérisé en ce qu'**en plus de la couche (1) et de la couche (2) ce film comporte au moins une autre couche (3) à base d'au moins un polymère incompatible avec le polyuréthane thermoplastique.

3. Film selon la revendication 2, **caractérisé en ce que** la couche (2) est disposée entre la couche (1) et la couche (3).

4. Film selon la revendication 1, **caractérisé en ce que** la proportion en masse de la couche (1) du film est d'au moins 70 % en poids.

5. Film selon la revendication 2, **caractérisé en ce que** le film a une structure à 5 couches, avec trois couches (1), une couche (3) et deux couches (2) entre la couche (3) et les couches (1).

6. Film selon la revendication 1, **caractérisé en ce que** le mélange de la couche (2) consiste en 5 à 40 % en poids de copolymère acrylonitrile-butadiène-styrène modifié ou copolymère greffé à séquences de MMA qui sont greffées sur des motifs de copolymère élastique de butadiène et styrène, et 60 à 95 % en poids de polyuréthane thermoplastique.

7. Film selon la revendication 1, **caractérisé en ce que** le polyuréthane thermoplastique utilisé dans la couche (1) est **caractérisé par** des segments souples essentiellement constitués de groupes éther de polytétrahydrofurane et polyéthylèneglycol.

8. Film selon la revendication 1, **caractérisé en ce que** le polyuréthane thermoplastique utilisé dans la couche (1) comporte des segments souples essentiellement constitués de groupes polyéther-carbonate.

9. Film selon la revendication 1 ou 2, **caractérisé en ce que** le film peut être produit par le procédé de soufflage.

10. Film selon la revendication 1, **caractérisé en ce que** le film présente une épaisseur totale de 10 µm à 50 µm, l'épaisseur de la/des couche(s) (1) étant comprise entre 5 µm et 45 µm et l'épaisseur de la/des couche(s) 2 étant comprise entre 5 µm et 45 µm.

11. Film selon la revendication 2, **caractérisé en ce qu'**on utilise comme polymère incompatible pour la couche (3) du polyéthylène.

12. Film selon la revendication 11, **caractérisé en ce qu'**on utilise comme polymère incompatible pour la couche (3) du polyéthylène basse densité.

13. Utilisation du film selon une ou plusieurs des revendications 1 à 12, pour la fabrication de systèmes de membranes.

14. Utilisation du film selon une ou plusieurs des revendications 1 à 12, pour la fabrication de sparadraps.
